# EUROPEAN PATENT APPLICATION

(11) **EP 4 641 211 A1**
(43) Date of publication of application: **29.10.2025**
(21) Application number: 23906530.3
(22) Date of filing: 13.11.2023
(51) Int. Cl.: G01N 35/02, G01N 1/00, G01N 1/31

(54) **SAMPLE PROCESSING SYSTEM**

(30) Priority: 22.12.2022 JP 2022206010
(71) Applicant: HITACHI HIGH-TECH CORPORATION, Tokyo 105-6409 (JP)
(72) Inventor: MATSUBARA, Shigeki, Tokyo 105-6409 (JP); OBARA, Takayuki, Tokyo 105-6409 (JP); SUGIYAMA, Hidetoshi, Tokyo 105-6409 (JP)
(74) Representative: Strehl & Partner mbB
(86) International application number: PCT/JP2023/040826
(87) International publication number: WO 2024/135159

(57) **Abstract**

Provided is a sample processing system that can efficiently perform processes. A solution therefor is to use a sample processing system including: a loading and collection unit including a loading mechanism for storing a plurality of slide glasses where a sample before a staining process, a dehydration process, a sealing process, or a scanning process is placed, and a collection mechanism for storing the slide glasses after a process is performed; a staining unit configured to perform the staining process on the sample placed on the slide glasses; a post-processing unit configured to perform the dehydration process, the sealing process, or the scanning process on the sample placed on the slide glasses; and a conveyance unit configured to convey the slide glasses between the staining unit and the loading and collection unit and between the loading and collection unit and the post-processing unit. The staining unit, the loading and collection unit, and the post-processing unit are disposed in this order.

## Description

### Technical Field

The present invention relates to a sample processing system, and more particularly to a sample processing system that can automatically process a biological sample.

### Background Art

In a pathological examination, a biological sample such as tissue or blood is processed to prepare a slide glass for microscopic observation, and the tissue on the slide glass is stained and observed with a microscope to perform the examination.

In recent years, automation of steps such as tissue staining, coverslip sealing of a slide glass after staining, and digital image acquisition (scanning) of a tissue slide glass has advanced, and further, automation of the entire steps without human intervention is required.

As a system for automating the entire steps, an automatic processing system is proposed in PTL 1 (JP2012-141287A) .

### Citation List

### Patent Literature

PTL 1: JP2012-141287A

### Summary of Invention

### Technical Problem

In the automatic processing system implemented by combining a plurality of types of functional modules as in PTL 1, for efficient automation, it is necessary to determine a process required for each slide glass and to determine to which module the slide glass is to be conveyed. However, although PTL 1 discloses what functions the modules have in constituting the automatic processing system, it is not disclosed how to specifically arrange processing modules and how to handle conveyance of the slide glass between the processing modules.

An object of the invention is to provide a pathological examination biological processing system including a plurality of processing modules, which is a system where the processing modules are optimally disposed and an entire process can be efficiently performed.

Other objects and novel features will become apparent from description of the present description and the accompanying drawings.

### Solution to Problem

A sample processing system according to an embodiment includes: a loading and collection unit including a loading mechanism for storing a plurality of slide glasses where a sample before a staining process, a dehydration process, a sealing process, or a scanning process is placed, and a collection mechanism for storing the slide glasses after a process is performed; a staining unit configured to perform the staining process on the sample placed on the slide glasses; a post-processing unit configured to perform the dehydration process, the sealing process, or the scanning process on the sample placed on the slide glasses; and a conveyance unit configured to convey the slide glasses between the staining unit and the loading and collection unit and between the loading and collection unit and the post-processing unit, in which the staining unit, the loading and collection unit, and the post-processing unit are disposed in this order.

### Advantageous Effects of Invention

According to an embodiment, a sample processing system that can efficiently perform processes is provided.

### Brief Description of Drawings

[FIG. 1] FIG. 1 is a plan view and a block view showing an overview of a sample processing system according to an embodiment.
[FIG. 2] FIG. 2 is a side view showing the overview of the sample processing system according to the embodiment.
[FIG. 3] FIG. 3 is a plan view showing a tray where a slide glass is placed according to the embodiment.
[FIG. 4] FIG. 4 is a plan view showing a conveyance unit for the slide glass according to the embodiment.
[FIG. 5] FIG. 5 is a perspective view showing a conveyance mechanism for the slide glass according to the embodiment.
[FIG. 6] FIG. 6 is a perspective view showing a loading and collection unit for the slide glass according to the embodiment.
[FIG. 7] FIG. 7 is a perspective view showing an example of the loading and collection unit for the slide glass according to the embodiment.
[FIG. 8] FIG. 8 is a flowchart showing a conveyance step for the slide glass according to the embodiment.
[FIG. 9] FIG. 9 is a flowchart specifically showing the conveyance step for the slide glass according to the embodiment.

### Description of Embodiments

Hereinafter, an embodiment will be described in detail with reference to the drawings. In all the drawings for describing the embodiment, members having the same function are denoted by the same reference sign, and repeated description thereof is omitted. In the following embodiment, description of the same or similar parts will not be repeated in principle unless particularly necessary.

An X direction, a Y direction, and a Z direction to be described in the present application intersect with one another and are orthogonal to one another. In the application, description will be provided by defining an X1 direction in the X direction as a right direction, an X2 direction in the X direction as a left direction, a Y1 direction in the Y direction as a forward direction, a Y2 direction in the Y direction as a backward direction, a Z1 direction in the Z direction as an upward direction, and a Z2 direction in the Z direction as a downward direction.

### (Embodiment)

### <Configuration 1 of Sample Processing System>

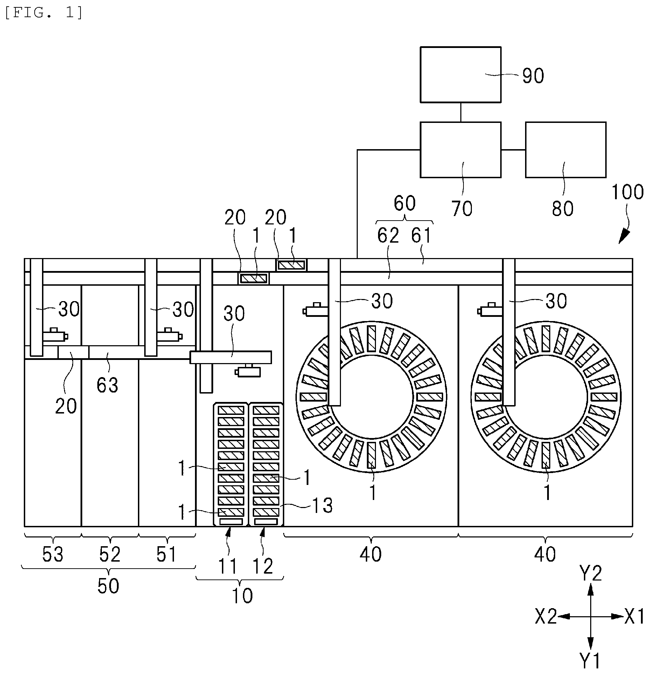

Hereinafter, a sample processing system 100 according to an embodiment will be described with reference to FIGS. 1 to 8. A sample is placed on a slide glass 1 to be used in the embodiment. The sample is, for example, a sample to be used in a pathological examination, and is a biological sample such as tissue or blood. The sample processing system 100 constitutes a part of an inspection apparatus such as a pathological staining apparatus.

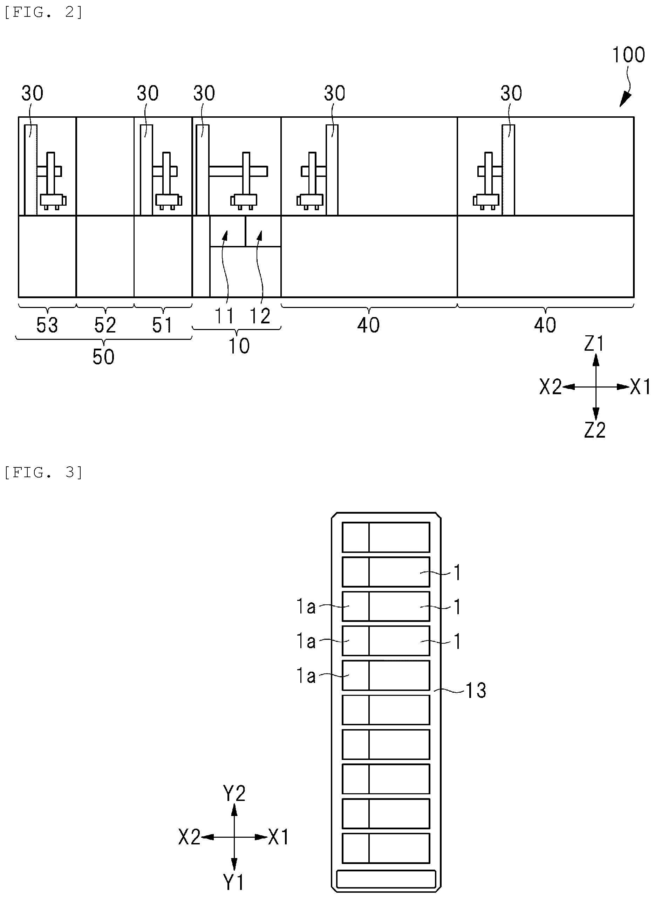

FIG. 1 is a schematic plan view and a block diagram showing the sample processing system of the embodiment. FIG. 2 is a schematic side view showing the sample processing system of the embodiment. FIG. 2 is a side view of a structure in FIG. 1 as viewed from a lower side in FIG. 1, that is, a side view of the structure in FIG. 1 as viewed in the Y2 direction. In FIGS. 1 and 2, it is conceivable that components constituting the sample processing system are sealed in a container, and here, an internal structure is shown through the sealed container. In FIG. 1, the slide glass 1 is hatched for easy understanding.

As shown in FIGS. 1 and 2, the sample processing system 100 includes a loading and collection unit (loading and storage module) 10, a plurality of conveyance mechanisms (gripper units) 30, a staining unit (staining module) 40, a dehydration unit (dehydration module) 51, a sealing unit (sealing module) 52, a scanning unit (scanning module) 53, and a conveyance unit (conveyance line) 60. The dehydration unit 51, the sealing unit 52, and the scanning unit 53 constitute a post-processing unit 50.

The staining unit 40 includes a disk, a reagent supply unit, and the like, and is provided to perform a staining process on the sample placed on the slide glass 1. The slide glass 1 is placed on the disk in the staining unit 40, and the sample placed on the slide glass 1 is stained with a reagent supplied from the reagent supply unit. As a staining method used in the staining unit 40, for example, hematoxylin-eosin (HE) staining, immunohistochemistry (IHC) staining, or in-situ hybridization (ISH) staining can be applied.

In the embodiment, a case where two staining units 40 are arranged in the sample processing system 100 is shown as an example. On the other hand, the number of staining units 40 disposed on the right side (X1 direction side) of the loading and collection unit 10 may be one or three or more. The plurality of staining units 40 may perform the staining process by different staining methods.

The loading and collection unit 10 includes a loading mechanism 11, a collection mechanism 12, and a plurality of trays (slide trays) 13. The loading mechanism 11 is provided to store the slide glass 1 before the staining process, a dehydration process, a sealing process, or an image-capturing (imaging, scanning) process. The collection mechanism 12 is provided to store the slide glass 1 after the image-capturing process.

Each of the loading mechanism 11 and the collection mechanism 12 is provided with trays 13 disposed in a plurality of layers in a vertical direction (Z direction). The plurality of trays 13 overlapping in the Z direction can be moved in the Y1 direction and the Y2 direction by a movement mechanism provided in the loading and collection unit 10.

As shown in FIG. 3, a plurality of slide glasses 1 are placed on the tray 13. The tray 13 includes a grip portion (handle) at an end in the Y1 direction. Although not shown, each slide glass 1 is placed on one placement table on the tray 13. A label or the like is attached to each slide glass 1, and an identification code 1a indicating information on each sample is provided on the label. Although not shown here, the loading and collection unit 10 is provided with an identification code reader (reading unit), and information in the identification code 1a of each slide glass 1 is read by the identification code reader. As the identification code 1a, for example, a barcode, a two-dimensional code, or radio frequency identification (RFID) can be applied. The identification code 1a is not limited thereto, and may be an identifier in another format as long as the information on the slide glass 1 can be retained.

The dehydration unit 51 is provided to perform a process (dehydration process) of replacing water contained in the sample with an organic solvent (for example, xylene) such that the slide glass 1 can be preserved. That is, the dehydration unit 51 performs the dehydration process on the sample placed on the slide glass 1.

The sealing unit 52 is a coverslip sealing unit. The slide glass 1 subjected to the staining process and the dehydration process is conveyed to the sealing unit 52. Thereafter, in the sealing unit 52, a coverslip (cover glass) is placed on the slide glass 1 (sealing process) to cover the stained sample. That is, the sealing unit 52 performs the sealing process on the sample placed on the slide glass 1.

The scanning unit 53 is provided for observing or capturing (imaging), with a microscope, the stained sample on the slide glass 1 subjected to the staining process, the dehydration process, and the sealing process. That is, the scanning unit 53 performs an observation process of observing the sample with a microscope or observing the sample using an image obtained by acquiring a digital image with a slide scanner, or both. In the application, observing the sample and capturing an image of the sample with the microscope are collectively referred to as scanning (scanning process). That is, the scanning unit 53 performs the scanning process on the sample placed on the slide glass 1.

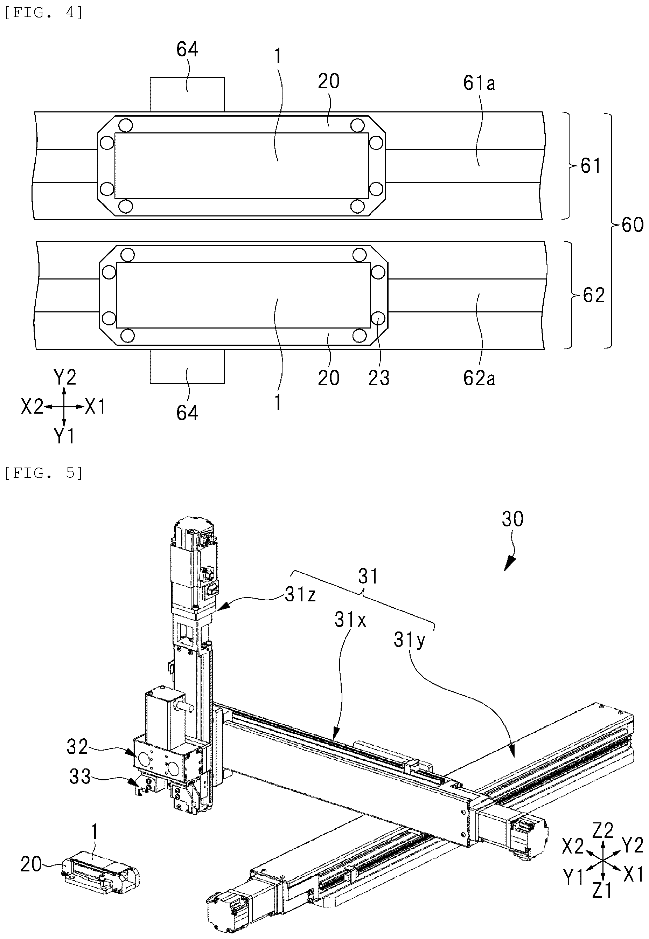

As shown in FIGS. 1 and 4, the sample processing system 100 includes the conveyance unit 60 for conveying the slide glass 1. The conveyance unit 60 includes a first conveyance line 61 and a second conveyance line 62. The first conveyance line 61 and the second conveyance line 62 extend in the X direction along the staining unit 40, the loading and collection unit 10, and the post-processing unit 50. A carrier 20 is mounted on each of the first conveyance line 61 and the second conveyance line 62. Here, the slide glass 1 placed on the carrier 20 can be conveyed by moving (sliding) the carrier 20 of each of the first conveyance line 61 and the second conveyance line 62 in the Y direction.

The first conveyance line 61 is used when the slide glass 1 before the staining process is conveyed from the loading mechanism 11 to the staining unit 40 or when the slide glass 1 after the scanning process is conveyed from the scanning unit 53 to the collection mechanism 12. That is, the first conveyance line 61 conveys the slide glass 1 only in the right direction (X1 direction) in FIGS. 1 and 4.

The second conveyance line 62 is used when the slide glass 1 after the staining process is conveyed from the staining unit 40 to the dehydration unit 51 of the post-processing unit 50. That is, the second conveyance line 62 conveys the slide glass 1 only in the left direction (X2 direction) in FIGS. 1 and 4. As shown in FIG. 4, a plurality of guide pins 23 are provided on an upper surface of the carrier 20. The first conveyance line 61 is provided with a guide 61a, and the second conveyance line 62 is provided with a guide 62a. Each of the first conveyance line 61 and the second conveyance line 62 is provided with an actuator 64.

In this way, the conveyance unit 60 can convey the slide glass 1 between the staining unit 40 and the loading and collection unit 10 and between the loading and collection unit 10 and the post-processing unit 50.

The carrier 20 where the slide glass 1 is placed is moved in the X1 direction or the X2 direction along the guide 61a or the guide 62a by a control unit 70 and the actuator 64, and can be moved to the vicinity of the loading and collection unit 10, the staining unit 40, the dehydration unit 51, or the scanning unit 53. By making a long side of the carrier 20 parallel to an extending direction of each of the first conveyance line 61 and the second conveyance line 62, an occupied area of the first conveyance line 61 and the second conveyance line 62 can be reduced.

A plurality of carriers 20 may be mounted on each of the first conveyance line 61 and the second conveyance line 62. Here, a case where the conveyance unit 60 includes the first conveyance line 61 and the second conveyance line 62 separately is shown as an example, and alternatively, the conveyance unit 60 may be implemented such that only one line serves as both the first conveyance line 61 and the second conveyance line 62.

The slide glass 1 is conveyed from the dehydration unit 51 to the sealing unit 52 by a third conveyance line 63 shown in FIG. 1. The slide glass 1 is conveyed from the sealing unit 52 to the scanning unit 53 by the third conveyance line 63. The third conveyance line 63 has the same configuration as the second conveyance line 62 and conveys the slide glass 1 only in the left direction (X2 direction) in FIGS. 1 and 4.

As shown in FIGS. 1 and 2, the sample processing system 100 includes the plurality of conveyance mechanisms 30. At least one conveyance mechanism 30 is provided in each of the loading and collection unit 10, the staining unit 40, the dehydration unit 51, and the scanning unit 53.

That is, the slide glass 1 is conveyed from the loading and collection unit 10 (loading mechanism 11) to the carrier 20 of the conveyance unit 60 (first conveyance line 61 or second conveyance line 62) and conveyed from the carrier 20 of the conveyance unit 60 (second conveyance line 62) to the loading and collection unit 10 (collection mechanism 12) by the conveyance mechanism 30 of the loading and collection unit 10. The slide glass 1 is conveyed from the carrier 20 of the conveyance unit 60 (first conveyance line 61) to the staining unit 40 and conveyed from the staining unit 40 to the carrier 20 of the conveyance unit 60 (second conveyance line 62) by the conveyance mechanism 30 of the staining unit 40. The slide glass 1 is conveyed from the carrier 20 of the conveyance unit 60 (second conveyance line 62) to the dehydration unit 51 by the conveyance mechanism 30 of the dehydration unit 51. The slide glass 1 is conveyed from the scanning unit 53 to the carrier 20 of the conveyance unit 60 (first conveyance line 61) by the conveyance mechanism 30 of the scanning unit 53.

A main feature of the sample processing system 100 of the embodiment is that the staining unit 40 and the post-processing unit 50 are arranged such that the loading and collection unit 10 is interposed therebetween. More specifically, the staining unit 40, the loading and collection unit 10, the dehydration unit 51, the sealing unit 52, and the scanning unit 53 are arranged in this order in the X direction.

### <Configuration of Conveyance Mechanism>

As shown in FIG. 5, the conveyance mechanism 30 includes a conveyance drive unit (gripper unit) 31, a finger drive unit (grip mechanism) 32, and a plurality of finger portions 33. The conveyance drive unit 31 and the finger drive unit 32 are controlled by the control unit 70 (see FIG. 1).

The conveyance drive unit 31 includes an X conveyance shaft 31x, a Y conveyance shaft 31y, and a Z conveyance shaft 31z. The finger drive unit 32 and the plurality of finger portions 33 can be moved in the X1 direction and the X2 direction by the X conveyance shaft 31x. The finger drive unit 32 and the plurality of finger portions 33 can be moved in the Y1 direction and the Y2 direction by the Y conveyance shaft 31y. The finger drive unit 32 and the plurality of finger portions 33 can be moved in the Z1 direction and the Z2 direction by the Z conveyance shaft 31z. In order for the plurality of finger portions 33 to grip the slide glass 1, it is sufficient that at least the Z conveyance shaft 31z is provided.

The finger drive unit 32 performs a gripping operation by the plurality of finger portions 33. In the embodiment, for example, four finger portions 33 are provided.

The slide glass 1 has a polygonal shape in a plan view, and here has a rectangular shape in a plan view. During conveyance of the slide glass 1, two side surfaces on short sides of the slide glass 1 are gripped by the conveyance mechanism 30. A thickness of the slide glass 1 in the Z direction is, for example, 1.0 mm or more and 1.1 mm or less.

### <Configuration of Loading and Collection Unit>

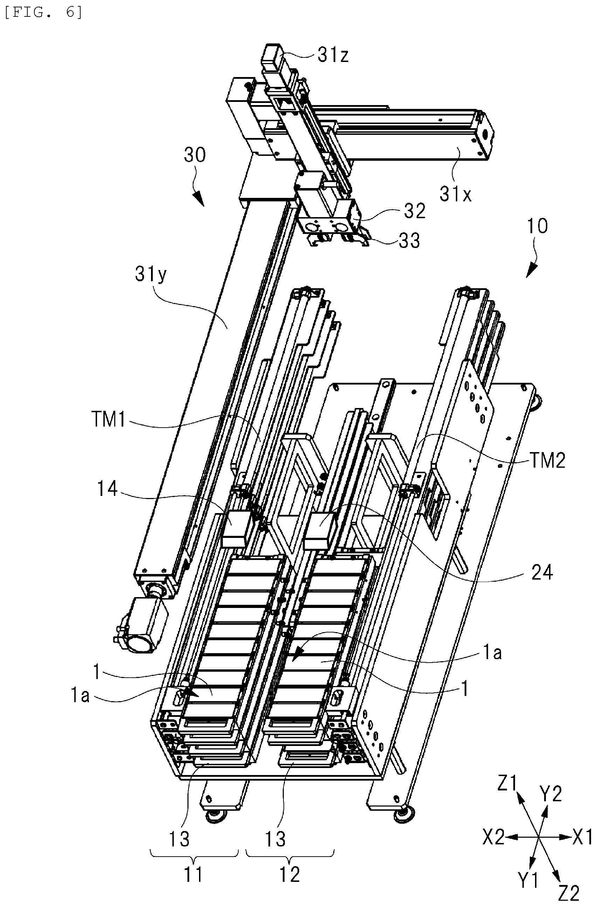

Hereinafter, with reference to FIG. 6, the loading and collection unit 10 for the slide glass 1 according to the embodiment will be described.

The loading mechanism 11 and the collection mechanism 12 are adjacent in the X direction and are integrated. The plurality of slide glasses 1 are placed on the tray 13 to be adjacent to each other in the Y direction.

The plurality of trays 13 can be mounted on the loading mechanism 11 such that the plurality of trays 13 are stacked in the vertical direction (Z direction). The loading mechanism 11 also includes an identification code reader 14.

As shown in FIG. 6, each of the plurality of slide glasses 1 is provided with the identification code 1a. The identification code reader 14 can read information in the identification code 1a of each of the plurality of slide glasses 1. The identification code reader 14 is movable in the Z direction by a movement mechanism (not shown) provided in the loading mechanism 11. Therefore, for example, when the tray 13 is fed from the outside of the loading and collection unit 10 to a predetermined layer in the loading mechanism 11, the identification code reader 14 can move to the predetermined layer and read information on the plurality of slide glasses 1 placed on the fed tray 13.

The plurality of trays 13 can be mounted on the collection mechanism 12 such that the plurality of trays 13 are stacked in the vertical direction (Z direction). The collection mechanism 12 includes an identification code reader 24.

The identification code reader 24 can read information in the identification code 1a of each of the plurality of slide glasses 1. The identification code reader 24 is movable in the Z direction by a movement mechanism (not shown) provided in the collection mechanism 12. Therefore, for example, when the tray 13 conveyed by a movement mechanism TM2 to be described later is fed to a predetermined layer in the collection mechanism 12, the identification code reader 14 can move to the predetermined layer and read the information on the plurality of slide glasses 1 placed on the fed tray 13.

The loading and collection unit 10 further includes a movement mechanism TM1 that individually moves the plurality of trays 13 mounted on the loading mechanism 11 in the Y direction, and the movement mechanism TM2 that individually moves the plurality of trays 13 mounted on the collection mechanism 12 in the Y direction. In the embodiment, the plurality of trays 13 are moved by individually moving a plurality of mounting portions where the trays 13 are placed in the Y direction by the movement mechanism TM1 or the movement mechanism TM2.

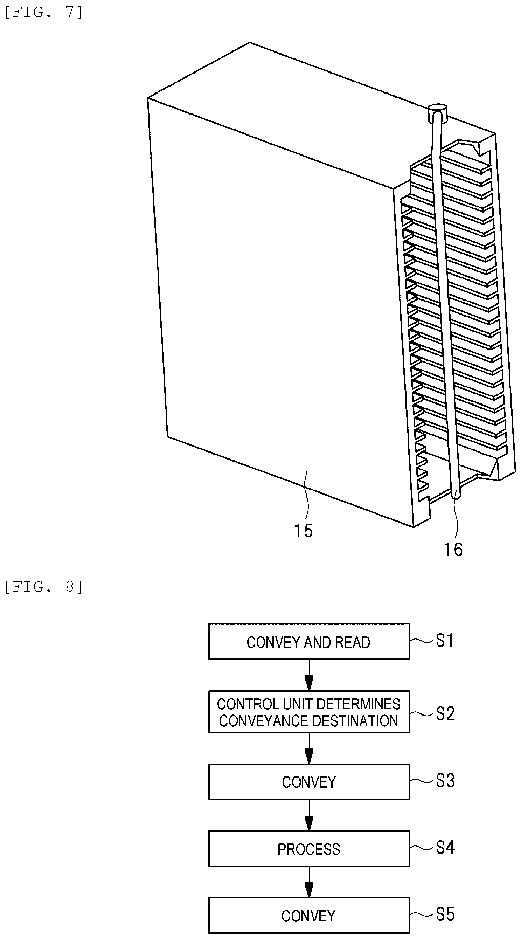

In FIGS. 1, 3, and 6, as a method for storing the plurality of slide glasses 1 for loading or collection, a method of stacking, in the vertical direction (Z direction), the trays 13 where the plurality of slide glasses 1 can be placed in a lateral direction (Y direction) has been described. In addition to such a method, as shown in FIG. 7, a container 15 where the slide glasses 1 can be inserted in the lateral direction (Y direction) and placed in a stacked manner in the vertical direction (Z direction) may be used. The container 15 is also called a basket. Each slide glass 1 is taken out from the container 15 and the slide glass 1 is inserted into the container 15 by a dedicated conveyance mechanism. The container 15 includes a bar 16 that is rotatably attached to the container 15 to prevent slippage of the slide glass 1.

### <Configuration 2 of Sample Processing System>

As shown in FIG. 1, the sample processing system 100 is connected to the control unit (CPU) 70, a storage unit 80, and an operation unit 90. Specifically, the sample processing system 100 is connected to the control unit 70, and the control unit 70 is connected to each of the storage unit 80 and the operation unit 90. Although not shown, the operation unit 90 may include a display unit (monitor).

The control unit 70 is electrically connected to each of the loading and collection unit 10, the plurality of conveyance mechanisms 30, the staining unit 40, the dehydration unit 51, the sealing unit 52, the scanning unit 53, and the conveyance unit 60, and oversees the same. For example, steps of moving the movement mechanisms TM1 and TM2 shown in FIG. 5, moving the identification code reader 14, reading the information in the identification code 1a, moving the finger drive unit 32 shown in FIG. 4, and supplying the reagent by the reagent supply unit are controlled by the control unit 70.

The storage unit 80 stores information on a location to which the slide glass 1 is to be conveyed (conveyance destination) corresponding to various types of information obtained by reading the identification code 1a of the slide glass 1. An operator can change the information stored in the storage unit 80 or an operation of the control unit 70 by operating the operation unit 90.

### <Operation of Sample Processing System>

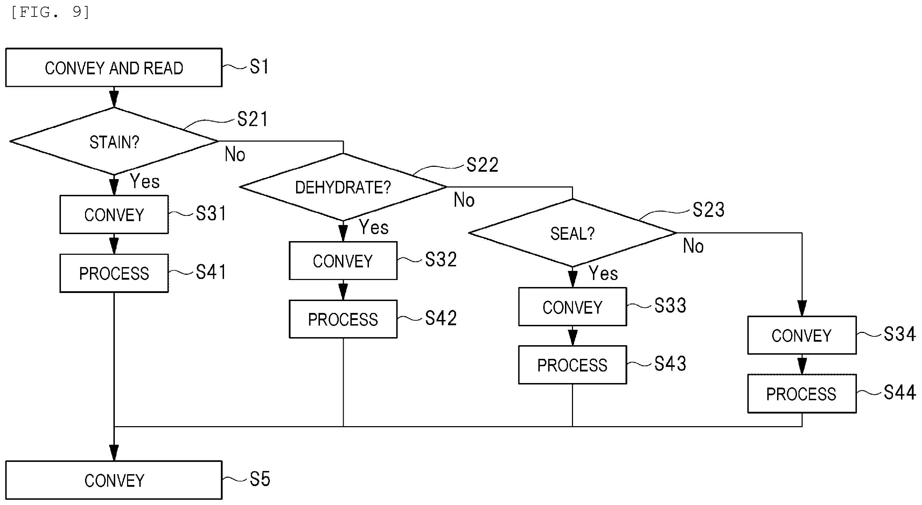

With reference to the flowcharts in FIGS. 8 and 9, an operation of the sample processing system according to the embodiment (slide glass conveyance step) will be described below. The following four patterns are conceivable as the processes performed in the sample processing system 100. That is, there are a first pattern in which the staining process, the dehydration process, the sealing process, and the scanning process are performed, a second pattern in which the dehydration process, the sealing process, and the scanning process are performed, a third pattern in which the sealing process and the scanning process are performed, and a fourth pattern in which only the scanning process is performed.

The second pattern is, for example, a case where the slide glass 1 already subjected to the staining process outside the sample processing system 100 is subjected to only post-processing in the sample processing system 100. The third pattern is, for example, a case where the slide glass 1 already subjected to the staining process and the dehydration process outside the sample processing system 100 is subjected to only the sealing process and the scanning process in the sample processing system 100. The fourth pattern is, for example, a case where the slide glass 1 already subjected to the staining process, the dehydration process, and the sealing process outside the sample processing system 100 is subjected to only the scanning process in the sample processing system 100.

FIG. 8 is a flowchart showing all of the four patterns. Here, first, the slide glass 1 is carried into the sample processing system 100, and an operation of reading the identification code 1a of each slide glass 1 is performed (step S1 in FIG. 8). That is, the predetermined tray 13 where the plurality of slide glasses 1 are placed is placed on a mounting portion (a portion where the trays 13 overlap in FIG. 6) in the loading mechanism 11. The tray 13 is fixed to the mounting portion in the loading mechanism 11 by a device such as a ball catch or a magnet catch (a position of the tray 13 shown in FIG. 1). Subsequently, a sensor (not shown) detects that the tray 13 is placed at a predetermined position, or the operator presses a predetermined open and close switch to move the tray 13 in the Y2 direction. That is, the tray 13 where the slide glasses 1 are placed moves to the inside of the sample processing system 100 (in the Y2 direction from the position of the tray 13 shown in FIG. 1).

At this time, the identification code reader 14 shown in FIG. 6 performs an operation of reading the identification code 1a shown in FIGS. 3 and 6. That is, a reading operation of sequentially reading identification codes 1a of the respective slide glasses 1 is performed during movement of the plurality of slide glasses 1.

Next, based on the information on each slide glass 1 obtained by the reading operation, the control unit 70 refers to the information on the conveyance destination stored in the storage unit 80 to determine the conveyance destination of the slide glass 1 (step S2 in FIG. 8).

Next, the slide glass 1 is conveyed to the staining unit 40 or the post-processing unit 50 according to the conveyance destination determined by the control unit 70 (step S3 in FIG. 8).

Next, processes are performed on the slide glass 1 in any one of the first to fourth patterns (step S4 in FIG. 8). Accordingly, all the processes performed on the slide glass 1 in the sample processing system 100 are completed.

Next, the slide glass 1 is conveyed from the post-processing unit 50 (specifically, the scanning unit 53) to the collection mechanism 12 of the loading and collection unit 10 (step S5 in FIG. 8). Specifically, after the slide glass 1 is placed on the carrier 20 of the first conveyance line 61 by the conveyance mechanism 30 of the scanning unit 53, the slide glass 1 is moved in the X1 direction by the first conveyance line 61 and thereby moved to the loading and collection unit 10. Thereafter, the slide glass 1 is conveyed by the conveyance mechanism 30 of the loading and collection unit 10 and placed on the tray 13 of the collection mechanism 12. At this time, the identification code reader 24 performs the operation of reading the identification code 1a on the conveyed slide glass 1.

As described above, the operation of the sample processing system (slide glass conveyance step) is completed.

Subsequently, with reference to FIG. 9, the operation of the sample processing system (slide glass conveyance step) will be described in more detail. Step S1 in FIG. 9 is the same as step S1 in FIG. 8.

Next, as an operation corresponding to step S2 in FIG. 8, the control unit 70 determines whether the slide glass 1 requires the staining process, based on the information on the slide glass 1 obtained by the reading operation (step S21 in FIG. 9).

In the case of the first pattern in which the staining process is required, the slide glass 1 placed on the tray 13 is conveyed by the conveyance mechanism 30 of the loading and collection unit 10 and placed on the carrier 20 of the first conveyance line 61. Subsequently, the slide glass 1 to be stained is moved in the X1 direction by the first conveyance line 61 and is conveyed to the staining unit 40 by the conveyance mechanism 30 of the staining unit 40 (step S31 in FIG. 9).

Next, the processes in the first pattern, that is, the staining process, the dehydration process, the sealing process, and the scanning process are performed on the slide glass 1 (step S41 in FIG. 9). Specifically, the sample placed on the slide glass 1 is stained on the disk in the staining unit 40. Subsequently, the slide glass 1 is placed on the carrier 20 of the second conveyance line 62 by the conveyance mechanism 30 of the staining unit 40. Subsequently, the slide glass 1 is moved in the X2 direction by the second conveyance line 62 and conveyed to the dehydration unit 51 by the conveyance mechanism 30 of the dehydration unit 51. Subsequently, the sample placed on the slide glass 1 is dehydrated in the dehydration unit 51. Subsequently, the slide glass 1 is placed on the carrier 20 of the third conveyance line 63 by the conveyance mechanism 30 of the dehydration unit 51. Subsequently, the slide glass 1 is moved in the X2 direction by the third conveyance line 63 and is subjected to the sealing process in the sealing unit 52. Subsequently, the slide glass 1 is moved in the X2 direction by the third conveyance line 63 and is subjected to the scanning process (microscopic observation or imaging) in the scanning unit 53.

Thereafter, similarly to step S5 in FIG. 8, the slide glass 1 is conveyed from the scanning unit 53 to the collection mechanism 12 of the loading and collection unit 10 (step S5 in FIG. 9). The above is the operation of the sample processing system 100 according to the first pattern.

When it is determined in step S21 in FIG. 9 that the staining process is not required, as an operation corresponding to step S2 in FIG. 8, the control unit 70 determines whether the slide glass 1 requires the dehydration process, based on the information on the slide glass 1 obtained by the reading operation (step S22 in FIG. 9) .

In the case of the second pattern in which the staining process is not required whereas the dehydration process is required, the slide glass 1 placed on the tray 13 is conveyed by the conveyance mechanism 30 of the loading and collection unit 10 and placed on the carrier 20 of the second conveyance line 62. Subsequently, the slide glass 1 to be dehydrated is moved in the X2 direction by the second conveyance line 62 and is conveyed to the dehydration unit 51 by the conveyance mechanism 30 of the dehydration unit 51 (step S32 in FIG. 9).

Next, the processes in the second pattern, that is, the dehydration process, the sealing process, and the scanning process are performed on the slide glass 1 (step S42 in FIG. 9). Specifically, the sample placed on the slide glass 1 is dehydrated in the dehydration unit 51. Subsequently, the slide glass 1 is placed on the carrier 20 of the third conveyance line 63 by the conveyance mechanism 30 of the dehydration unit 51. Subsequently, the slide glass 1 is moved in the X2 direction by the third conveyance line 63 and is subjected to the sealing process in the sealing unit 52. Subsequently, the slide glass 1 is moved in the X2 direction by the third conveyance line 63 and is subjected to the scanning process in the scanning unit 53.

Thereafter, similarly to step S5 in FIG. 8, the slide glass 1 is conveyed from the scanning unit 53 to the collection mechanism 12 of the loading and collection unit 10 (step S5 in FIG. 9). The above is the operation of the sample processing system 100 according to the second pattern.

When it is determined in step S22 in FIG. 9 that the dehydration process is not required, as an operation corresponding to step S2 in FIG. 8, the control unit 70 determines whether the slide glass 1 requires the sealing process, based on the information on the slide glass 1 obtained by the reading operation (step S23 in FIG. 9).

In the case of the third pattern in which the staining process and the dehydration process are not required whereas the sealing process is required, the slide glass 1 placed on the tray 13 is conveyed by the conveyance mechanism 30 of the loading and collection unit 10 and placed on the carrier 20 of the second conveyance line 62. Subsequently, the slide glass 1 is moved in the X2 direction by the second conveyance line 62, conveyed to the dehydration unit 51 by the conveyance mechanism 30 of the dehydration unit 51, placed on the carrier 20 of the third conveyance line 63 by the conveyance mechanism 30 of the dehydration unit 51, moved in the X2 direction by the third conveyance line 63, and conveyed to the sealing unit 52 (step S33 in FIG. 9).

Next, the processes in the third pattern, that is, the sealing process and the scanning process are performed on the slide glass 1 (step S43 in FIG. 9). Specifically, the slide glass 1 to be sealed is subjected to the sealing process in the sealing unit 52. Subsequently, the slide glass 1 is moved in the X2 direction by the third conveyance line 63 and is subjected to the scanning process in the scanning unit 53.

Thereafter, similarly to step S5 in FIG. 8, the slide glass 1 is conveyed from the scanning unit 53 to the collection mechanism 12 of the loading and collection unit 10 (step S5 in FIG. 9). The above is the operation of the sample processing system 100 according to the third pattern.

In step S23 in FIG. 9, when it is determined that the sealing process is not required, that is, in the case of the fourth pattern in which the staining process, the dehydration process, and the sealing process are not required whereas the scanning process is required, the slide glass 1 placed on the tray 13 is conveyed by the conveyance mechanism 30 of the loading and collection unit 10 and placed on the carrier 20 of the second conveyance line 62. Subsequently, the slide glass 1 is moved in the X2 direction by the second conveyance line 62, conveyed to the dehydration unit 51 by the conveyance mechanism 30 of the dehydration unit 51, placed on the carrier 20 of the third conveyance line 63 by the conveyance mechanism 30 of the dehydration unit 51, moved in the X2 direction by the third conveyance line 63, and conveyed to the scanning unit 53 (step S34 in FIG. 9). Here, after being conveyed by the conveyance mechanism 30 of the loading and collection unit 10 and placed on the carrier 20 of the second conveyance line 62, the slide glass 1 may be conveyed to the vicinity of the scanning unit 53 by the second conveyance line 62, and the slide glass 1 may be conveyed into the scanning unit 53 by the conveyance mechanism 30 of the scanning unit 53.

Next, the process in the fourth pattern, that is, the scanning process is performed on the slide glass 1 (step S44 in FIG. 9). Specifically, the slide glass 1 to be scanned is subjected to the scanning process in the scanning unit 53.

Thereafter, similarly to step S5 in FIG. 8, the slide glass 1 is conveyed from the scanning unit 53 to the collection mechanism 12 of the loading and collection unit 10 (step S5 in FIG. 9). The above is the operation of the sample processing system 100 according to the fourth pattern.

As described above, in the embodiment, the processes in each of the four patterns can be automatically performed in the sample processing system 100.

### <Effects of Embodiment>

When a staining device that performs the staining process and a post-processing device that performs the dehydration process, the sealing process, and the scanning process, which are post-processing after staining, are separately prepared, it is necessary to manually move the slide glass (tray) between such devices, and efficiency of the entire process on the slide glass is low. Therefore, if a sample processing system that can automatically perform all of the staining process, the dehydration process, the sealing process, and the scanning process is used, the efficiency of the entire process can be improved.

However, not all of the plurality of slide glasses loaded into the sample processing system necessarily require the staining process, the dehydration process, the sealing process, and the scanning process. That is, each of the plurality of slide glasses requires the processes in any one of the first to fourth patterns described above, and the processes performed in the sample processing system are not identical. Therefore, in the sample processing system that can execute the staining process, the dehydration process, the sealing process, and the scanning process, a design considering an efficient workflow is required to perform each process in the first to fourth patterns.

For example, it is conceivable to implement the sample processing system by arranging the loading and collection unit, the staining unit, the dehydration unit, the sealing unit, and the scanning unit in this order according to an order in which the staining process, the dehydration process, the sealing process, and the scanning process are performed. However, in such a sample processing system, it is necessary to convey the slide glass on which only the post-processing is to be performed to pass through the vicinity of the staining unit, resulting in a time loss.

Therefore, as shown in FIG. 1, in the sample processing system 100 of the embodiment, the staining unit 40 and the post-processing unit 50 are arranged such that the loading and collection unit 10 is interposed therebetween. That is, a workflow for conveyance from the loading and collection unit 10 to the staining unit 40 and a workflow for conveyance to the post-processing unit 50 are separated. Accordingly, a slide glass 1 that requires the staining process and a slide glass 1 subjected to only the post-processing without requiring the staining process can both be conveyed from the loading and collection unit 10 to a processing unit in a short time. Therefore, it is possible to provide a sample processing system that can efficiently perform processes.

Here, the staining unit 40, the loading and collection unit 10, the dehydration unit 51, the sealing unit 52, and the scanning unit 53 are arranged in this order in the X direction. Accordingly, the slide glass 1 that requires the processes in any one of the first to fourth patterns can be processed while being conveyed in a short time, and thus the processes in the sample processing system can be efficiently performed.

Here, the first conveyance line 61 for conveying the slide glass 1 in the X1 direction and the second conveyance line 62 for conveying the slide glass 1 in the X2 direction are separately provided in the conveyance unit 60. In this way, by setting the direction in which the slide glass 1 is moved by each conveyance line (the first conveyance line 61 and the second conveyance line 62) to one direction, efficient conveyance becomes available.

Although the invention made by the present inventors has been specifically described above based on the embodiment, the invention is not limited to the embodiment, and various modifications can be made without departing from the gist of the invention. For example, in the above embodiment, the case where the conveyance unit 60 has a linear shape has been described, and alternatively, the conveyance unit 60 may have an L shape bent at a right angle, for example, in the vicinity of the loading and collection unit 10 in a plan view. In this case, the staining unit 40, the loading and collection unit 10, and the post-processing unit 50 are arranged in this order along the L shape. At this time, each of the first conveyance line 61 and the second conveyance line 62 may include two conveyance lines that are divided in the vicinity of the loading and collection unit 10 and convey the slide glass 1 in different directions intersecting each other in the plan view.

### Industrial Applicability

The invention can be widely used for a sample processing system.

### Reference Signs List

1 slide glass
1a identification code
10 loading and collection unit
11 loading mechanism
12 collection mechanism
13 tray
14, 24 identification code reader
20 carrier
30 conveyance mechanism
40 staining unit
50 post-processing unit
51 dehydration unit
52 sealing unit
53 scanning unit
60 conveyance unit
61 first conveyance line
62 second conveyance line
63 third conveyance line
70 control unit
80 storage unit
90 operation unit
100 sample processing system

## Claims

1. A sample processing system comprising:
a loading and collection unit including a loading mechanism for storing a plurality of slide glasses where a sample before a staining process, a dehydration process, a sealing process, or a scanning process is placed, and a collection mechanism for storing the slide glasses after a process is performed;
a staining unit configured to perform the staining process on the sample placed on the slide glasses;
a post-processing unit configured to perform the dehydration process, the sealing process, or the scanning process on the sample placed on the slide glasses; and
a conveyance unit configured to convey the slide glasses between the staining unit and the loading and collection unit and between the loading and collection unit and the post-processing unit, wherein
the staining unit, the loading and collection unit, and the post-processing unit are disposed in this order.

2. The sample processing system according to claim 1, wherein
the conveyance unit includes a conveyance line extending in a first direction along the staining unit, the loading and collection unit, and the post-processing unit.

3. The sample processing system according to claim 1, wherein
the conveyance unit includes
a first conveyance line that extends in a first direction along the staining unit, the loading and collection unit, and the post-processing unit and that conveys the slide glasses in a direction from the loading and collection unit toward the staining unit, and
a second conveyance line that extends in the first direction along the staining unit, the loading and collection unit, and the post-processing unit and that conveys the slide glasses in a direction from the staining unit toward the loading and collection unit.

4. The sample processing system according to claim 1, wherein
the post-processing unit includes
a dehydration unit that performs the dehydration process on the sample placed on the slide glasses,
a sealing unit that performs the sealing process on the sample placed on the slide glasses, and
a scanning unit that performs the scanning process on the sample placed on the slide glasses, and
the staining unit, the loading and collection unit, the dehydration unit, the sealing unit, and the scanning unit are arranged in this order.

5. The sample processing system according to claim 1, wherein
the slide glasses are processed according to any pattern of
a first pattern in which the staining process, the dehydration process, the sealing process, and the scanning process are performed in this order,
a second pattern in which the staining process is not performed and the dehydration process, the sealing process, and the scanning process are performed in this order,
a third pattern in which the staining process and the dehydration process are not performed and the sealing process and the scanning process are performed in this order, and
a fourth pattern in which the staining process, the dehydration process, and the sealing process are not performed and the scanning process is performed.

6. The sample processing system according to claim 1, further comprising:
a reading unit configured to read an identification code of each of the slide glasses placed on the loading mechanism;
a control unit connected to the sample processing system; and
a storage unit connected to the control unit and configured to store processing information of the slide glass corresponding to various types of information obtained by reading the identification code of the slide glass, wherein
based on the information obtained by reading the identification code of the slide glass by the reading unit, the control unit refers to the processing information stored in the storage unit and determines whether to convey the slide glass to the staining unit or the post-processing unit.

7. The sample processing system according to claim 6, wherein
the control unit determines whether the staining process is required,
when the staining process is required, the staining process, the dehydration process, and the scanning process are performed in this order on the slide glasses,
when the staining process is not required, the control unit determines whether the dehydration process is required,
when the dehydration process is required, the dehydration process, the sealing process, and the scanning process are performed in this order on the slide glasses,
when the dehydration process is not required, the control unit determines whether the sealing process is required,
when the sealing process is required, the dehydration process and the scanning process are performed in this order on the slide glasses, and
when the sealing process is not required, the scanning process is performed on the slide glasses.
